# EUROPEAN PATENT APPLICATION

(11) **EP 4 322 313 A2**
(43) Date of publication of application: **14.02.2024**
(21) Application number: 23187080.9
(22) Date of filing: 21.07.2023
(51) Int. Cl.: H01M 50/519, H01M 50/284, H01M 10/613, H01M 10/6551

(54) **A BATTERY PACK AND AN ELECTRIC TOOL INCLUDING THE BATTERY PACK**

(30) Priority: 10.08.2022 CN 202210956387
(71) Applicant: Techtronic Cordless GP, Anderson, SC 29621 (US)
(72) Inventor: LI, Sheng Ping, Dongguan City (CN); GUO, Zhao Jie, Dongguan City (CN); ZHAO, Jiang, Dongguan City (CN); ZHAO, Jian Guo, Dongguan City (CN)
(74) Representative: Parker, Andrew James

(57) **Abstract**

The present invention discloses a battery pack and an electric tool that comprises such a battery pack. A battery pack (1) comprises: one or a plurality of battery cells (11), a circuit board (12), which is located inside the housing of the battery pack, a lead board (13), which is connected to the electrode terminals of one or the plurality of battery cells (11), and a metal plate (14), which is arranged on said circuit board (12) and electrically connects said lead board (13) to the circuit in said circuit board (12), wherein said metal plate (14) is fixed to said circuit board (12) using the surface mounting technology .

## Description

### Technical Field

The present invention generally relates to a battery pack, which can be used for electric tools.

### Background Art

In a conventional battery pack, to introduce the current from a plurality of battery cells into the circuit board, a busbar is usually set between the battery cells and the circuit board. On the one hand, the busbar is electrically connected to the positive terminal or negative terminal of the plurality of battery cells, and, on the other hand, it is connected to the pad on the circuit board through welding or electric resistance welding. This welding method has weaknesses such as low efficiency, high requirement for operating space, and high consumption of tin material, and also results in a larger size of the final battery pack.

### Summary of the Invention

The present invention solves the above problems by providing a novel connection method between the lead board (or busbar) of the battery pack and the circuit board.

In one aspect, the present invention provides a battery pack, which comprises: one or a plurality of battery cells, a circuit board, which is located within the housing of the battery pack, a lead board, which is connected to the electrode terminal of one or the plurality of battery cells, and a metal plate, which is arranged on said circuit board and electrically connects the lead board to the circuit in said circuit board, wherein said metal plate is fixed to said circuit board using surface mounting technology.

Preferably, said lead board is laser welded to said metal plate.

Preferably, said battery pack further comprises a battery bracket used to support the one or plurality of battery cells, wherein said lead board, metal plate, and circuit board are fixed to said battery bracket by a first screw.

Preferably, said metal plate is located on the lower surface of said circuit board and partially extends beyond the edge of said circuit board for laser welding with said lead board. Alternatively, the circuit board comprises a notch at the edge, and said metal plate partially extends into said notch of said circuit board for laser welding with said lead board.

In one variant, said metal plate is located on the upper surface of said circuit board, and said lead board is laser welded to the upper surface of said metal plate. Advantageously, said metal plate on the upper surface partially extends beyond the edge of said circuit board or into said notch of said circuit board for laser welding with said lead board.

Preferably, said metal plate is designed to have one or a plurality of pins, which fit into the corresponding one or plurality of sockets in said circuit board.

Preferably, said metal plate is made of copper alloy.

In one embodiment, said battery pack further comprises a fuse, which is connected to said metal plate or integrated with said metal plate. Preferably, said fuse is located on the lower side of said circuit board, and said circuit board has an opening above said fuse.

In another embodiment, said battery pack further comprises a hot block, which is in thermal contact with said metal plate to absorb heat from said lead board and said metal plate. Advantageously, a thermal conductive material is arranged between said hot block and said metal plate. Said thermal conductive material can be thermal conductive silicone or a thermal conductive silicone pad. Preferably, said metal plate comprises one or a plurality of segments in contact with one or a plurality of surfaces of said hot block. Specifically, said metal plate comprises a base, a lug extending from said base, and a bent portion extending from said base, wherein said base, lug, and bent portion partially surround said hot block. Preferably, said metal plate, said hot block, and said circuit board are fixed together by said second screw. Preferably, the battery pack further comprises a thermal pad, which is in thermal contact with said hot block and/or said metal plate to remove heat from said hot block and said metal plate. Advantageously, said thermal pad is a thermal conductive silicon pad. Preferably, said hot block is made of aluminium or copper.

In another aspect, the present invention provides a kind of battery pack, which comprises: one or a plurality of battery cells; a circuit board; a lead board, which is connected to the electrode terminal of one or the plurality of battery cells; a metal plate, which is arranged on said circuit board and electrically connects the lead board to the circuit in said circuit board; and a hot block, which is thermally connected to said metal plate and/or lead board. Preferably, said hot block is thermally connected to a metal plate and/or lead board on the output circuit of the battery pack. Preferably, a plurality of surfaces of said hot block are thermally connected to said metal plate and/or lead board. Preferably, said metal plate comprises a base, a lug extending from said base, and a bent portion extending from said base, wherein said base, lug, and bent portion partially surround said hot block. Preferably, said metal plate, said hot block, and said circuit board are fixed together using screws.

In another aspect, the present invention provides an electric tool, comprising a battery pack described above.

The battery pack of the present invention improves the connection between the circuit board and the battery cell, thereby reducing the product volume, improving production efficiency, and cutting down the cost. At the same time, in consideration of the problem of heat concentration in the connection between the circuit board and the battery cell, the battery pack of the present invention also provides a more reliable heat dissipation method.

### Description of Attached Drawings

The present invention is elaborated in detail in conjunction with the examples shown the attached drawings, wherein:
Figure 1 shows a schematic stereogram of a battery pack according to the present invention;
Figure 2 shows a schematic stereogram of a layout method of the metal plate according to the present invention;
Figure 3 shows a variant of the layout method shown in Figure 2;
Figure 4 shows a schematic stereogram of another layout method of the metal plate according to the present invention;
Figure 5 shows a cross-sectional view of the layout method shown in Figure 4;
Figure 6 shows a schematic top view stereogram of another layout method of the metal plate according to the present invention;
Figure 7 shows a schematic top view stereogram of the layout method shown in Figure 6;
Figure 8 shows a schematic stereogram of the connection method between the hot block and related parts according to the present invention;
Figure 9 shows another schematic stereogram of the connection method shown in Figure 8, where the circuit board is omitted; and
Figure 10 shows a schematic stereogram of the hot block according to the present invention.

List of drawing reference signs:
1 Battery pack
11 Battery cell
12 Circuit board
121 Socket
122 Notch
123 Opening
13 Lead board
131 Base
132 Pin end
133 Terminal
14 Metal plate
141 Pin
142 Lug
143 Bent portion
144 Base
15 Battery bracket
16 First screw
17 Second screw
18 Hot block
19 Fuse.

### Specific Embodiments

To make it easy to understand the present invention, a more comprehensive description is provided below by referring to related attached drawings. The attached drawings show preferred embodiments of the present invention. However, the present invention can be implemented in a variety of different forms, not limited to the embodiments described herein. On the contrary, these embodiments are provided to enable a more comprehensive and thorough understanding of the disclosed content of the present invention.

According to the present invention, the term "metal plate" or "lead board" refers to a part that is essentially a sheet metal or sheet material, which can be basically flat or include one or more bent portions and/or extension portions formed by a bending or cutting process, in order to avoid or connect to other parts according to specific space needs.

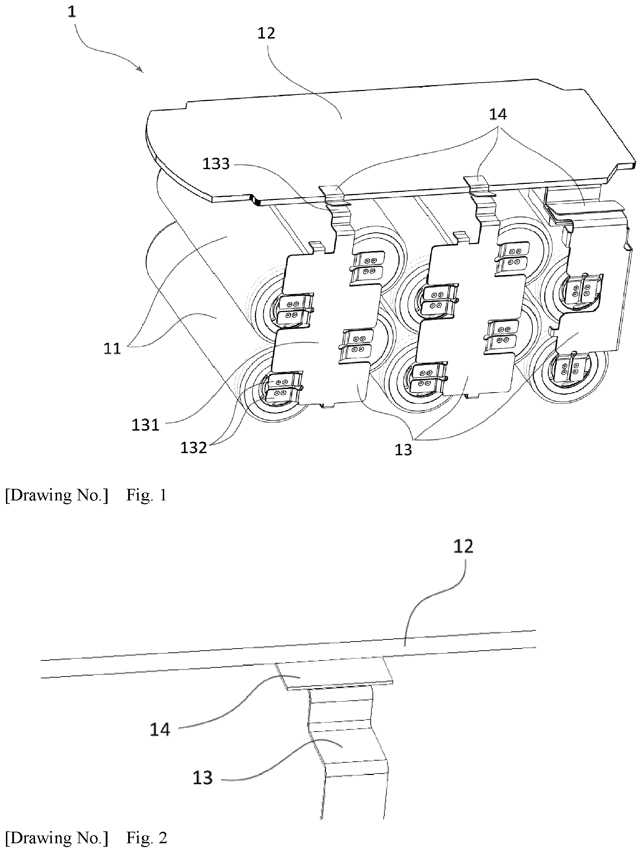

Figure 1 shows a schematic stereogram of a battery pack according to the present invention. The battery pack 1 comprises a plurality of battery cells 11, a circuit board 12 located at the top of the battery cell 11, a plurality of lead boards (also known as "busbars") 13, and a plurality of metal plates 14. These parts can be accommodated in a housing not shown to form a battery pack and connected through interfaces to an electric tool or other electrical devices. As shown in Figure 1, battery cells 11 are stacked in a two-dimensional array and supported and held in place by a battery bracket not shown. Battery cells 11 are placed horizontally in the housing of battery pack 1 so that their electrode terminals (i.e. The positive terminal and negative terminal) are basically located on the front and rear sides of the battery pack.

The lead board 13 is located on the front and rear sides of battery pack 1, used to connect in parallel or in series a plurality of battery cells 11 configured at multiples levels and in multiple columns. The lead board 13 is a conductive metal plate with a plurality of pin ends 132 connected to the electrode terminals of the battery cells 11, a base 131 that connects a plurality of battery cells 11 in series or parallel through pin ends 132, and a terminal 133 that connects the base 131 to the circuit board 12. The lead board 13 is made by cutting and bending a metal plate using a mould. The electrical connection between the pin ends 132 and the electrode terminals of the battery cells 11 can be implemented by laser welding, or by electric resistance welding or other methods. In particular, the electrode terminal can be laser welded to the pin end 132 of the lead board 13 by applying laser in the direction towards the electrode terminal, and the welding point or weld j oint forms an electrical connection between the electrode terminal and the pin end 132.

Metal plate 14 is located on the circuit board 12 and adjacent to or at the edge of the circuit board 12, used to connect the terminal 133 of the lead board 13 to the circuit in the circuit board 12. The metal plate 14 can be made of copper alloy. Figure 1 shows three lead boards 13 and three metal plates 14 located on the front side of the battery pack 1. It can be imagined that there are corresponding lead boards and metal plates on the back of the battery pack 1.

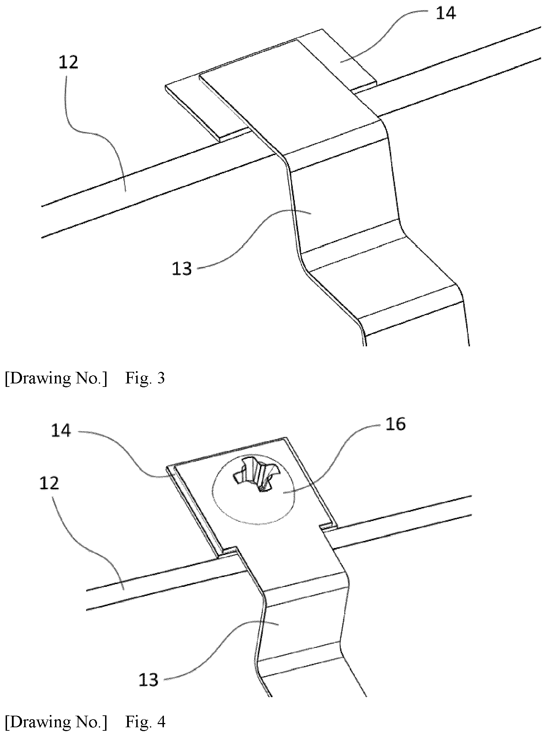

Figures 2 and 3 show a layout method of the metal plate according to the present invention and its variants. In this layout method, the metal plate 14 is fixed to the circuit board 12 by surface mounting technology (SMT), and the lead board 13 is connected to the metal plate 14 by laser welding.

SMT, also called "surface mounting technology", is a popular technology and process in the electronic assembly industry. It is a circuit assembly technology that installs surface mounted parts without pins or short leads on the surface of printed circuit boards or other substrates, and then solders to assemble them by reflow soldering or dip soldering. The application of SMT shows significant advantages in various aspects such as product miniaturization, batching, and automation, as well as the advantages of high reliability, strong anti-vibration ability, low solder joint defect rate, etc. Laser welding is an efficient and precise welding method using laser beams of high energy density as a heat source, characterized by small scope of heat affected zone, small thermal deformation of the work piece, no need for contact with the work piece, fast welding speed, high positioning accuracy, etc.

In general, SMT is used to install electronic components such as capacitors and resistors to circuit boards. The present invention creatively applies this technology to the connection between the metal plate 14 and circuit board 12 so that the metal plate 14 is attached to the circuit board 12 like the pin of circuit board 12. Then, the wiring board 13 of the battery cell 11 is connected to the metal plate 14 using the laser welding technology, thus implementing the electrical connection between the battery cell 11 and the circuit board 12. In this solution, the metal plate 14 is set using the surface mounting technology and laser welding technology instead of conventional tin welding, which reduces the product size, boosts the production efficiency, and improves the reliability of the connection point. In addition, it also reduces the consumption of soldering material.

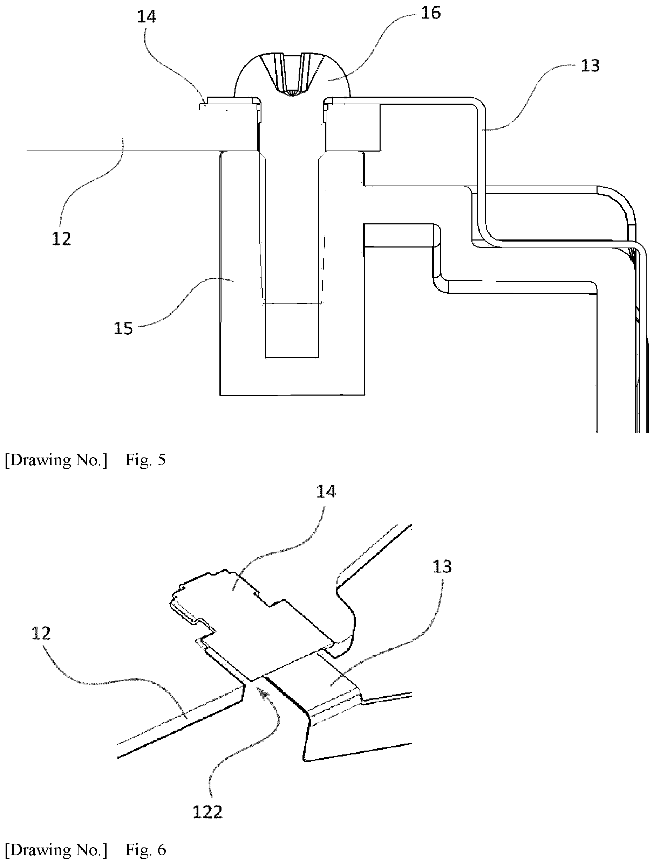

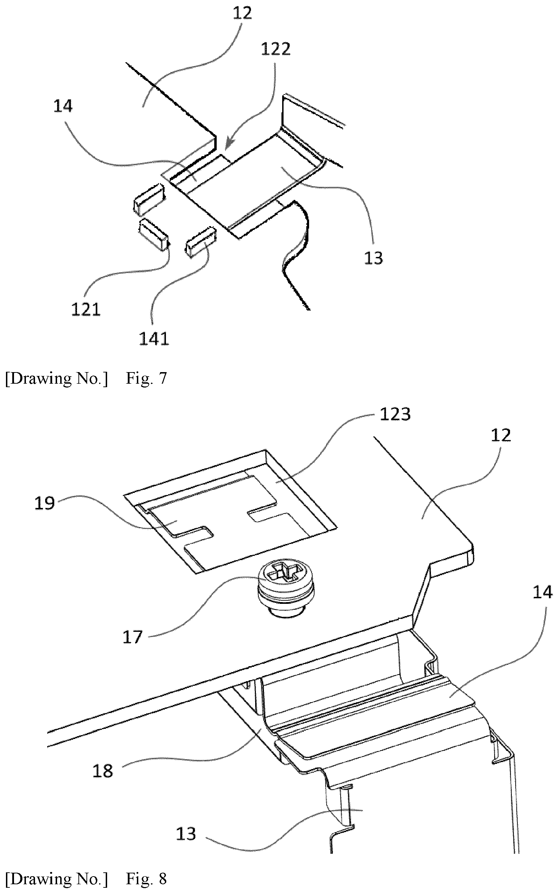

In the example shown in Figure 2, the metal plate 14 is set on the lower surface of the circuit board 12 and partially extends beyond the edge of the circuit board 12. The terminal 133 of the wiring board 13 is located on the upper side or the lower side of the excess part of the metal plate 14, and the two are fixed together through laser welding. In one variant, the circuit board 12 can be provided with a notch 122 at the edge (as shown in Figure 6 and Figure 7), and the metal plate 14 extends into the notch 122 to facilitate laser welding.

In the variant of the above example shown in Figure 3, the metal plate 14 is set on the upper surface of the circuit board 12, the terminal 133 of the wiring board 13 is located on the upper side of the metal plate 14, and the two are fixed together through laser welding. Now, the metal plate 14 does not need to extend beyond the edge or into the notch of the circuit board 12.

Figures 4 and 5 show another layout method of the metal plate according to the present invention. In this layout method, the metal plate 14 is fixed to the circuit board 12 using the surface mounting technology or SMT, and the lead board 13, the metal plate 14, the circuit board 12, and the battery bracket 15 are fixed together using the first screw 16. To meet this end, the battery bracket 15 used to hold the battery cell 11 in place is designed with a screw hole that fits with the first screw 16 (as shown in Figure 5). The circuit board 12 located at the top of battery cell 11 usually needs to be fixed to the battery bracket 15. Therefore, in this layout method, the first screw 16 not only achieves the electrical connection between the lead board 13 and the metal plate 14, but also fixes the circuit board 12 to the battery bracket 15. The lead board 13 and metal plate 14 shown in the figure are located on the upper surface of the circuit board 12. It can be imagined that the lead board 13 and metal plate 14 can also be located on the lower surface of the circuit board 12.

Figures 6 and 7 show another layout method of the metal plate according to the present invention. In this layout method, the metal plate 14 is fixed to the circuit board 12 using the SMT and pins, and the lead board 13 is connected to the metal plate 14 by laser welding. As shown in Figure 7, the metal plate 14 is provided with a plurality of pins 141 that fit into a plurality of sockets 121 set in the circuit board 12 to position or further secure the metal plate 14 to the circuit board 12. The circuit board 12 comprises the notch 122 at the edge, and the metal plate 14 partially extends into the notch 122 for laser welding with the lead board 13. Now, the metal plate 14 can be located on the lower or upper surface of the circuit board 12. It can be imagined that the metal plate 14 may not be designed with a notch 122, and the lead board 13 is laser welded to the metal plate 14 in the manner shown in Figure 2 or Figure 3, or is fixed to the metal plate 14 using screws in the manner shown in Figure 4 and Figure 5.

Figures 8, 9, and 10 show the heat dissipation layout according to the present invention. In this layout, the battery pack 1 further comprises a fuse (or "fuse wire") 19 and a hot block 18, the lead board 13 is laser welded to the metal plate 14, and the metal plate 14, the circuit board 12, and the hot block 18 are fixed together using the second screw 17. It can be imagined that the connection between the lead board 13 and the metal plate 14 can be implemented using the screw 17 instead of using the laser welding technology. The lead board 13 shown in Figure 8 is the total output line of the battery pack. Therefore, the current flowing through the lead board 13 is greater and generates more heat. The fuse is therefore set on the corresponding metal plate 14. As described below, a hot block 18 is set to effectively dissipate heat and prevent the lead board 13 and metal plate 14 from overheating and melting the surrounding housing and battery cell bracket. Specifically, the examples shown in Figure 8 and Figure 5 can be combined to secure the circuit board 12, lead board 13, metal plate 14, and hot block 18 to the battery bracket 15 using screws. Now, the first screw 16 and the second screw 17 are the same screw.

In the conventional battery packs, a fuse is usually formed in the lead board of the battery cell so that the heat generated by the electrode terminal and fuse of the battery cell is concentrated in the lead board, and this layout is not conducive to heat dissipation operation. At the same time, in the battery pack configuration shown in Figure 1, the lead boards are located on the front and rear sides and are close to the side walls of the housing, posing a risk of melting the housing.

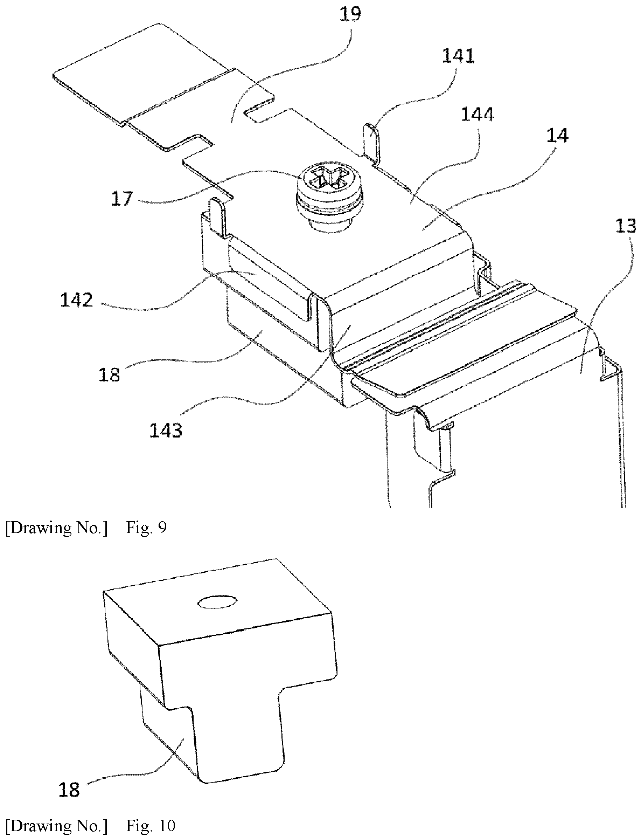

As shown in Figures 8 and 9, the fuse 19 of the present invention is moved to the lower side of the circuit board 12 and formed as a whole with the metal plate 14 as an extension portion of it. Circuit board 12 is provided with an opening 123 above fuse 19 for easy heat dissipation. In this way, the fuse 19, which serves as a heat source, is dispersed in different parts with the electrode terminal of the battery cell 11 and spatially separated, which is conducive to heat dissipation operation. Meanwhile, fuse 19 located on the lower side of circuit board 12 is separated from the top wall of the battery pack housing, eliminating the risk of melting the surrounding parts.

As shown in Figures 9 and 10, a hot block 18 is set on the main circuit. The main circuit is an output circuit of a plurality of parallel battery cell strings. It can be understood that the hot block 18 can also be set on other required metal plates 14 and/or lead boards 13. The hot block 18 can be set close to or away from the fuse 19. Since the fuse 19 is a high heating part (with a high resistance), the hot block 18 set close to fuse 19 can provide a better heat dissipation capacity. The hot block 18 can be designed in various shapes and sizes and be formed using suitable materials, provided that it can achieve a good heat dissipation capacity. In the example shown in the figure, the hot block 18 has a roughly T-shaped contour (which can be another suitable shape) and is in thermal contact (preferably in planar contact) with the metal plate 14 to absorb heat from the lead board 13 and the metal plate 14, thereby avoiding the melting of surrounding plastic components, including the housing and battery cell bracket, due to overheating of the lead board 13 and the metal plate 14. Specifically, the metal plate 14 comprises the base 144, the pin 141 extending upwards from the base 144, the lug 142 extending downwards from the base 144, and the bent portion 143 extending downwards from the base 144. The fuse 19 extends forward from the base 144 of the metal plate 14. The metal plate 14 is positioned or fixed to the circuit board 12 through the pin 141. The base 144 of the metal plate 14, lug 142, and the bent portion 143 are arranged to closely adhere to the top and side surfaces of the hot block 18, thereby partially enclosing the hot block 18 to increase the heat transfer area. In other words, the metal plate 14 can be arranged to be in contact with a plurality of surfaces of the hot block 18 to increase the heat transfer area. To enhance the heat transfer effect, a thermal conductive material such as thermal conductive silicone or a thermal conductive silicone pad can be arranged between the hot block 18 and the metal plate 14. The hot block 18 can be made of aluminium or copper. The hot block 18 has a large volume, so the temperature does not rise too quickly when heat is absorbed, and it can play a role in accumulating heat and slowly releasing it. In the embodiment shown in the figure, the hot block 18 and the metal plate 14 are provided with corresponding holes, and screws are used to fix the hot block 18 and the metal plate 14 together. It can be understood that other methods can be used to connect the hot block 18 and the metal plate 14, provided that the two can form a thermal contact. In the improved example, to accelerate the release of heat, a thermal pad (not shown in the figure), e.g., a thermal conductive silicon pad, can be adhered to the surface of the hot block 18 and/or metal plate 14. The thermal pad can be deformed freely and extend in the free space inside the battery pack housing, thereby guiding the heat accumulated in the hot block 18 to a greater space. In addition, the thermal pad can also adhere to the heat dissipation part (such as the metal strip extending from the inside of the housing to the outside of the housing) on the circuit board or housing, thereby transferring the heat accumulated in the hot block 18.

Various technical characteristics of the above embodiments can be combined arbitrarily. Not all the possible combinations of each technical characteristic in the above embodiments have been described in consideration of concise description. However, as long as there is no contradiction in the combination of these technical characteristics, it should be considered to fall within the scope of this specification.

The above mentioned embodiments only express several embodiments of the present invention, and their description is relatively specific and detailed, but cannot be understood as limitation to the scope of the present patent for invention. It should be pointed out that those skilled in the art can make several deformations and improvements without departing from the concept of the present invention, all of which fall within the protection scope of the present invention. Therefore, the protection scope of the present patent for invention should be subject to the attached claims.

## Claims

1. A battery pack (1), which comprises:
One or a plurality of battery cells (11);
a circuit board (12), which is located inside a housing of said battery pack;
a lead board (13), which is connected to electrode terminals of one or a plurality of battery cells (11);
a metal plate (14), which is set on said circuit board (12) and electrically connects said lead board (13) to a circuit in said circuit board (12),
wherein said metal plate (14) is fixed to said circuit board (12) using the surface mounting technology.

2. The battery pack (1) according to claim 1, wherein said lead board (13) is laser welded to said metal plate (14).

3. The battery pack (1) according to claim 1, which further comprises a battery bracket (15) for supporting the one or plurality of battery cells, wherein said lead board (13), said metal plate (14), and said circuit board (12) are fixed to said battery bracket (15) using a first screw (16).

4. The battery pack (1) according to claim 2, wherein said metal plate (14) is located on a lower surface of said circuit board (12) and partially extends beyond an edge of said circuit board (12) for laser welding with said lead board (13), or wherein said circuit board (12) comprises a notch (122) located at an edge, and said metal plate (14) partially extends into said notch (122) of said circuit board (12) for laser welding with said lead board (13), or wherein said metal plate (14) is located on an upper surface of said circuit board (12), and said lead board (13) is laser welded to an upper surface of said metal plate (14).

5. The battery pack (1) according to claim 1, wherein said metal plate (14) is provided with one or a plurality of pins (141) that fit to a corresponding one or plurality of sockets (121) in said circuit board (12).

6. The battery pack (1) according to any one of claims 1 to 5, which further comprises a fuse (19), which is connected to said metal plate (14) or integrated with said metal plate (14), preferably said fuse (19) is located on a lower side of said circuit board (12), and said circuit board (12) has an opening (123) above said fuse (19).

7. The battery pack (1) according to claim 6, which further comprises a hot block (18), which is in thermal contact with said metal plate (14) to absorb heat from said lead board (13) and said metal plate (14), preferably a thermal conductive material is arranged between said hot block (18) and said metal plate (14), and, particularly preferably, said hot block (18) is made of aluminium or copper.

8. The battery pack (1) according to claim 7, wherein said metal plate (14) comprises a base (144), a lug (142) extending from the base (144), and a bent portion (143) extending from the base (144), wherein said base (144), said lug (142), and said bent portion (143) partially surround said hot block (18).

9. The battery pack (1) according to claim 7 or 8, wherein said metal plate (14), said hot block (18), and said circuit board (12) are fixed together using said second screw (17).

10. The battery pack (1) according to claim 7 or 8, which further comprises a thermal pad, which is in thermal contact with said hot block (18) and/or said metal plate (14) to remove heat from said hot block (18) and said metal plate (14).

11. A battery pack (1), which comprises:
one or a plurality of battery cells (11);
a circuit board (12);
a lead board (13), which is connected to electrode terminals of one or a plurality of battery cells (11);
a metal plate (14), which is set on said circuit board (12) and electrically connects said lead board (13) to the circuit in said circuit board (12); and
a hot block (18), which is thermally connected to said metal plate (14) and/or lead board (13).

12. The battery pack (1) according to claim 11, wherein said hot block (18) is thermally connected to a metal plate (14) and/or lead board (13) on an output circuit of the battery pack.

13. The battery pack (1) according to claim 11, wherein a plurality of surfaces of said hot block (18) are thermally connected to said metal plate (14) and/or lead board (13), preferably said metal plate (14) comprises a base (144), a lug (142) extending from the base (144), and a bent portion (143) extending from the base (144), wherein said base (144), said lug (142), and said bent portion (143) partially surround said hot block (18).

14. The battery pack (1) according to any one of claims 11 to 13, wherein said metal plate (14), said hot block (18), and said circuit board (12) are fixed together using screws.

15. An electric tool, which comprises a battery pack (1) according to any one of claims 1 to 14.
